# EUROPEAN PATENT APPLICATION

(11) **EP 4 618 638 A1**
(43) Date of publication of application: **17.09.2025**
(21) Application number: 23893427.7
(22) Date of filing: 26.09.2023
(51) Int. Cl.: H04W 52/14

(54) **COMMUNICATION METHOD AND COMMUNICATION APPARATUS**

(30) Priority: 21.11.2022 CN 202211452985
(71) Applicant: Huawei Technologies Co., Ltd., Shenzhen, Guangdong 518129 (CN)
(72) Inventor: DENG, Chun, Shenzhen, Guangdong 518129 (CN); CHENG, Zhulin, Shenzhen, Guangdong 518129 (CN); XIE, Bo, Shenzhen, Guangdong 518129 (CN); LIN, Haihong, Shenzhen, Guangdong 518129 (CN); LI, Dan, Shenzhen, Guangdong 518129 (CN)
(74) Representative: Körber, Martin Hans
(86) International application number: PCT/CN2023/121669
(87) International publication number: WO 2024/109335

(57) **Abstract**

A communication method and a communication apparatus are provided, and are applied to the field of wireless communication. In the method, two frequencies are deployed in a first cell, and a third frequency is deployed in a second cell, so that a first terminal chooses to access the first cell at a first frequency preferentially, and a second terminal chooses to access the second cell at the third frequency preferentially. A first mapping relationship is not configured for a network device, so that the first terminal is not handed over to the second cell after accessing the first cell at the first frequency, and the second terminal is not handed over to the first frequency of the first cell after accessing the second cell at the third frequency, to ensure communication experience of a high-speed railway user after the first cell is accessed at the first frequency. A second mapping relationship is configured for the network device, and when the second terminal is subject to a call drop risk when moving in an overlapping area between the first cell and the second cell, the network device may allow the second terminal to be handed over from the second cell to a second frequency of the first cell, to reduce the call drop risk of the second terminal.

## Description

This application claims priority to Chinese Patent Application No. 202211452985.2, filed with the China National Intellectual Property Administration on November 21, 2022 and entitled "COMMUNICATION METHOD AND COMMUNICATION APPARATUS", which is incorporated herein by reference in its entirety.

### TECHNICAL FIELD

Embodiments of this application relate to the field of wireless communication, and more specifically, to a communication method and a communication apparatus.

### BACKGROUND

Currently, to improve communication experience of a user, different networks may be deployed for different scenarios. For example, a high-speed railway dedicated network that specializes in providing a service for a high-speed railway user may be deployed along a high-speed railway line, and a high-speed railway public network that specializes in providing a service for a non-high-speed railway user may be deployed around the high-speed railway dedicated network.

### SUMMARY

This application provides a communication method and a communication apparatus, so that a first terminal can camp on a first cell that serves the first terminal, and when communication quality of a second terminal is poor, the second terminal is allowed to be handed over from a second cell to the first cell.

According to a first aspect, a communication method is provided. The method includes: A network device sends a first synchronization signal block SSB at a first frequency, and sends a second SSB at a second frequency. The first frequency and the second frequency correspond to a first cell, and the first cell is a cell that serves a first terminal. Then the network device sends a third SSB at a third frequency. The third frequency corresponds to a second cell, the second cell is a cell that serves a second terminal, a moving speed of the second terminal is less than a moving speed of the first terminal. A first mapping relationship is not configured for the network device, and the first mapping relationship includes a correspondence among the first cell, the first frequency, the second cell, and the third frequency; and a second mapping relationship is configured for the network device, and the second mapping relationship includes a correspondence among the first cell, the second frequency, the second cell, and the third frequency. Then the network device receives a first request from the first terminal. The first request requests to access the first cell at the first frequency. In addition, the network device receives a second request from the second terminal. The second request requests to access the second cell at the third frequency.

Based on the foregoing technical solution, two frequencies, that is, the first frequency and the second frequency, are deployed in the first cell, and the third frequency is deployed in the second cell, so that the first terminal chooses to access the first cell at the first frequency preferentially, and the second terminal chooses to access the second cell at the third frequency preferentially. The first mapping relationship is not configured for the network device, so that the first terminal is not handed over from the first cell to the second cell after accessing the first cell at the first frequency, and the second terminal is not handed over from the second cell to the first frequency of the first cell after accessing the second cell at the third frequency, to ensure communication experience of a high-speed railway user after the first cell is accessed at the first frequency. The second mapping relationship is configured for the network device, and when the second terminal is subject to a call drop risk when moving in an overlapping area between the first cell and the second cell, the network device may allow the second terminal to be handed over from the second cell to the second frequency of the first cell, to reduce the call drop risk when the second terminal moves in the overlapping area between the first cell and the second cell.

It should be noted that because the first terminal chooses to access the first cell at the first frequency preferentially, if the second terminal is handed over from the second cell to the first cell at the first frequency, communication experience of the high-speed railway user is affected.

In an implementation, first transmit power is greater than second transmit power, the first transmit power is transmit power used when the network device sends the first SSB at the first frequency, and the second transmit power is transmit power used when the network device sends the second SSB at the second frequency.

Based on the foregoing technical solution, to enable the first terminal to choose to access the first cell at the first frequency preferentially, when transmitting the first SSB and the second SSB, the network device may use higher transmit power for the first SSB sent at the first frequency, and use lower transmit power for the second SSB sent at the second frequency. In this case, signal energy of the first SSB detected by the first terminal at the first frequency is high, and then the first terminal may choose to access the first cell at the first frequency. Therefore, accuracy of accessing the first cell by the first terminal at the first frequency is improved.

In an implementation, the method further includes: sending a first identifier at the first frequency. The first identifier indicates that the first cell is a cell that serves the first terminal.

Based on the foregoing technical solution, to enable the first terminal to choose to access the first cell at the first frequency preferentially, the network device may send the first identifier at the first frequency, and the first terminal may determine, based on the first identifier received at the first frequency, that the first cell is a cell that serves the first terminal. In this case, the first terminal may access the first cell at the first frequency, to improve accuracy of accessing the first cell by the first terminal at the first frequency.

In an implementation, the second frequency and the third frequency are a same frequency.

Based on the foregoing technical solution, because the terminal performs cell handover at a same frequency more efficiently, if the second frequency and the third frequency are enabled to be a same frequency, when the second terminal needs to be handed over from the second cell to the second frequency of the first cell, a handover procedure can be completed more efficiently between the network device and the second terminal.

In an implementation, the method further includes: if the first terminal camps on the second cell, handing over the first terminal from the second cell to the first frequency of the first cell.

Based on the foregoing technical solution, the first terminal that camps on the second cell is handed over to the first frequency of the first cell, so that the first terminal can camp on the first frequency of the first cell, to improve communication quality of the first terminal that camps on the first cell, and improve communication experience of a high-speed railway user.

In an implementation, the method further includes: if the second terminal camps on the first cell at the first frequency, handing over the second terminal from the first cell to the second cell.

Based on the foregoing technical solution, the second terminal that camps on the first cell at the first frequency is handed over to the second cell, so that a quantity of second terminals that camp on the first frequency of the first cell is reduced, to improve communication quality of the first terminal that camps on the first cell, and improve communication experience of a high-speed railway user.

According to a second aspect, a communication method is provided. The method includes: A first terminal receives a first SSB from a network device at a first frequency, and receives a second SSB from the network device at a second frequency. The first frequency and the second frequency correspond to a first cell, and the first cell is a cell that serves the first terminal. A first mapping relationship is not configured for the network device, and the first mapping relationship includes a correspondence among the first cell, the first frequency, a second cell, and a third frequency; and a second mapping relationship is configured for the network device, the second mapping relationship includes a correspondence among the first cell, the second frequency, the second cell, and the third frequency, the third frequency corresponds to the second cell, the second cell is a cell that serves a second terminal, and a moving speed of the second terminal is less than a moving speed of the first terminal. Then the first terminal sends a first request to the network device. The first request requests to access the first cell at the first frequency.

Based on the foregoing technical solution, two frequencies, that is, the first frequency and the second frequency, are deployed in the first cell, and the third frequency is deployed in the second cell, so that the first terminal chooses to access the first cell at the first frequency preferentially, and the second terminal chooses to access the second cell at the third frequency preferentially. The first mapping relationship is not configured for the network device, so that the first terminal is not handed over from the first cell to the second cell after accessing the first cell at the first frequency, and the second terminal is not handed over from the second cell to the first frequency of the first cell after accessing the second cell at the third frequency, to ensure communication experience of a high-speed railway user after the first cell is accessed at the first frequency. The second mapping relationship is configured for the network device, and when the second terminal is subject to a call drop risk when moving in an overlapping area between the first cell and the second cell, the network device may allow the second terminal to be handed over from the second cell to the second frequency of the first cell, to reduce the call drop risk when the second terminal moves in the overlapping area between the first cell and the second cell.

In an implementation, first transmit power is greater than second transmit power, the first transmit power is transmit power used when the first SSB is sent at the first frequency, and the second transmit power is transmit power used when the second SSB is sent at the second frequency.

Based on the foregoing technical solution, to enable the first terminal to choose to access the first cell at the first frequency preferentially, when transmitting the first SSB and the second SSB, the network device may use higher transmit power for the first SSB sent at the first frequency, and use lower transmit power for the second SSB sent at the second frequency. In this case, signal energy of the first SSB detected by the first terminal at the first frequency is high, and then the first terminal may choose to access the first cell at the first frequency. Therefore, accuracy of accessing the first cell by the first terminal at the first frequency is improved.

In an implementation, the method further includes: receiving a first identifier that is sent by the network device at the first frequency. The first identifier indicates that the first cell is a cell that serves the first terminal. The sending a first request to the network device includes: sending the first request to the network device based on the first identifier.

Based on the foregoing technical solution, to enable the first terminal to choose to access the first cell at the first frequency preferentially, the network device may send the first identifier at the first frequency, and the first terminal may determine, based on the first identifier received at the first frequency, that the first cell is a cell that serves the first terminal. In this case, the first terminal may access the first cell at the first frequency, to improve accuracy of accessing the first cell by the first terminal at the first frequency.

In an implementation, the second frequency and the third frequency are a same frequency.

Based on the foregoing technical solution, because the terminal performs cell handover at a same frequency more efficiently, if the second frequency and the third frequency are enabled to be a same frequency, when the second terminal needs to be handed over from the second cell to the second frequency of the first cell, a handover procedure can be completed more efficiently between the network device and the second terminal.

According to a third aspect, a communication method is provided. The method includes: A second terminal receives a third SSB from a network device at a third frequency. The third frequency corresponds to a second cell, and the second cell is a cell that serves the second terminal. A first mapping relationship is not configured for the network device, and the first mapping relationship includes a correspondence among a first cell, a first frequency, the second cell, and the third frequency; and a second mapping relationship is configured for the network device, the second mapping relationship includes a correspondence among the first cell, a second frequency, the second cell, and the third frequency, the first cell and the second frequency correspond to the first cell, the first cell is a cell that serves a first terminal, and a moving speed of the second terminal is less than a moving speed of the first terminal. Then the second terminal sends a second request to the network device. The second request requests to access the second cell at the third frequency.

Based on the foregoing technical solution, two frequencies, that is, the first frequency and the second frequency, are deployed in the first cell, and the third frequency is deployed in the second cell, so that the first terminal chooses to access the first cell at the first frequency preferentially, and the second terminal chooses to access the second cell at the third frequency preferentially. The first mapping relationship is not configured for the network device, so that the first terminal is not handed over from the first cell to the second cell after accessing the first cell at the first frequency, and the second terminal is not handed over from the second cell to the first frequency of the first cell after accessing the second cell at the third frequency, to ensure communication experience of a high-speed railway user after the first cell is accessed at the first frequency. The second mapping relationship is configured for the network device, and when the second terminal is subject to a call drop risk when moving in an overlapping area between the first cell and the second cell, the network device may allow the second terminal to be handed over from the second cell to the second frequency of the first cell, to reduce the call drop risk when the second terminal moves in the overlapping area between the first cell and the second cell.

In an implementation, first transmit power is greater than second transmit power, the first transmit power is transmit power used when the network device sends the first SSB at the first frequency, and the second transmit power is transmit power used when the network device sends the second SSB at the second frequency.

Based on the foregoing technical solution, to enable the first terminal to choose to access the first cell at the first frequency preferentially, when transmitting the first SSB and the second SSB, the network device may use higher transmit power for the first SSB sent at the first frequency, and use lower transmit power for the second SSB sent at the second frequency. In this case, signal energy of the first SSB detected by the first terminal at the first frequency is high, and then the first terminal may choose to access the first cell at the first frequency. Therefore, accuracy of accessing the first cell by the first terminal at the first frequency is improved.

In an implementation, the method further includes: receiving a first identifier that is sent by the network device at the first frequency. The first identifier indicates that the first cell is a cell that serves the first terminal. The sending a second request to the network device includes: sending the second request to the network device based on the first identifier.

Based on the foregoing technical solution, to enable the second terminal to choose to access the first cell at the second frequency preferentially, the network device may send the first identifier at the first frequency, and the second terminal may determine, based on the first identifier received at the first frequency, that the first cell is a cell that serves the first terminal. In this case, the second terminal may access the first cell at the second frequency, to improve accuracy of accessing the first cell by the second terminal at the second frequency.

In an implementation, the second frequency and the third frequency are a same frequency.

Based on the foregoing technical solution, because the terminal performs cell handover at a same frequency more efficiently, if the second frequency and the third frequency are enabled to be a same frequency, when the second terminal needs to be handed over from the second cell to the second frequency of the first cell, a handover procedure can be completed more efficiently between the network device and the second terminal.

According to a fourth aspect, a communication apparatus is provided. The communication apparatus may be the network device or the terminal device in the foregoing method, or may be a module used in the network device or the terminal device. The communication apparatus includes a processor that is coupled to a memory, and may be configured to execute instructions in the memory, to implement the method performed by the network device or the terminal device in any one of the foregoing aspects and the possible implementations of any one of the foregoing aspects. Optionally, the communication apparatus further includes the memory. Optionally, the communication apparatus further includes a communication interface, and the processor is coupled to the communication interface.

When the communication apparatus is the network device or the terminal device, the communication interface may be a transceiver, or an input/output interface.

Optionally, the transceiver may be a transceiver circuit. Optionally, the input/output interface may be an input/output circuit.

According to a fifth aspect, a program is provided. When being executed by a communication apparatus, the program is used to perform any method in any one of the foregoing aspects and the possible implementations of any one of the foregoing aspects.

According to a sixth aspect, a program product is provided. The program product includes program code. When the program code is run by a communication apparatus, the communication apparatus is enabled to perform any method in any one of the foregoing aspects and the possible implementations of any one of the foregoing aspects.

According to a seventh aspect, a computer-readable storage medium is provided. The computer-readable storage medium stores a program. When the program is executed, a communication apparatus is enabled to perform any method in any one of the foregoing aspects and the possible implementations of any one of the foregoing aspects.

According to an eighth aspect, a communication system is provided. The communication system includes the foregoing network device, first terminal, and second terminal.

### BRIEF DESCRIPTION OF DRAWINGS

FIG. 1 is a diagram of an architecture of a communication system to which an embodiment of this application is applied;
FIG. 2 is a diagram of a networking manner according to an embodiment of this application;
FIG. 3 is a schematic interaction flowchart of a communication method according to an embodiment of this application;
FIG. 4 is a block diagram of a communication apparatus according to an embodiment of this application; and
FIG. 5 is a block diagram of another communication apparatus according to an embodiment of this application.

### DESCRIPTION OF EMBODIMENTS

The following describes technical solutions of embodiments in this application with reference to the accompanying drawings. In the descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate the following three cases: Only A exists, both A and B exist, and only B exists, where A and B may be singular or plural. In addition, in the descriptions of this application, unless otherwise specified, "a plurality of" means two or more than two. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, words such as "first" and "second" are used in embodiments of this application to distinguish between same items or similar items that provide basically same functions or purposes. A person skilled in the art may understand that the words such as "first" and "second" do not limit a quantity or an execution sequence, and the words such as "first" and "second" do not indicate a definite difference.

The technical solutions in embodiments of this application may be applied to various communication systems, for example, new radio (New Radio, NR) in a 5th generation (5th Generation, 5G) mobile communication system and a future mobile communication system.

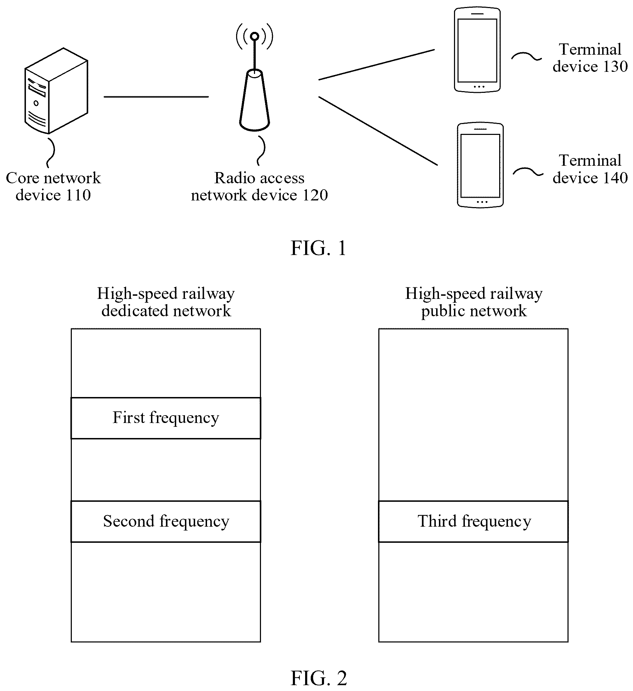

FIG. 1 is a diagram of an architecture of a mobile communication system applicable to an embodiment of this application. As shown in FIG. 1, the mobile communication system includes a core network device 110, a radio access network device 120, and at least one terminal device (for example, a terminal device 130 and a terminal device 140 in FIG. 1). The terminal device is connected to the radio access network device in a wireless manner, and the radio access network device is connected to the core network device in a wireless or wired manner. The core network device and the radio access network device may be different independent physical devices, or functions of the core network device and logical functions of the radio access network device may be integrated into one physical device, or some functions of the core network device and some functions of the radio access network device may be integrated into one physical device. The terminal device may be located at a fixed position, or may be mobile. FIG. 1 is merely an example diagram. The communication system may further include other network devices, for example, may further include a wireless relay device and a wireless backhaul device, which are not shown in FIG. 1. Quantities of core network devices, radio access network devices, and terminal devices included in the mobile communication system are not limited in embodiments of this application.

The radio access network device in embodiments of this application is an access device used by the terminal device to access the mobile communication system in a wireless manner. The radio access network device may be a NodeB NodeB, an evolved NodeB (evolved NodeB, eNodeB), a transmission reception point (transmission reception point, TRP), a next generation NodeB (next generation NodeB, gNB) in a 5G mobile communication system, a base station in a future mobile communication system, or an access node in a Wi-Fi system, may be a radio controller in a cloud radio access network (Cloud Radio Access Network, CRAN) scenario, or may be a relay station, a vehicle-mounted device, a wearable device, a network device in a future evolved PLMN network, or the like. A specific technology and a specific device form that are used by the radio access network device are not limited in embodiments of this application. In this application, the radio access network device is referred to as a network device for short. Unless otherwise specified, in this application, all network devices are radio access network devices.

The terminal device in embodiments of this application may also be referred to as a terminal (Terminal), user equipment (user equipment, UE), a mobile station (mobile station, MS), a mobile terminal (mobile terminal, MT), and the like. The terminal device may be a mobile phone (mobile phone), a pad (Pad), a computer having a wireless transceiver function, a virtual reality (Virtual Reality, VR) terminal device, an augmented reality (Augmented Reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form that are used by the terminal device are not limited in embodiments of this application.

The network device and the terminal device may be deployed on land, including an indoor or outdoor device and a handheld or vehicle-mounted device, or may be deployed on water, or may be deployed on an airplane, a balloon, and a satellite in the air. Application scenarios of the network device and the terminal device are not limited in embodiments of this application.

The network device and the terminal device may communicate with each other by using a licensed spectrum (licensed spectrum), or may communicate with each other by using an unlicensed spectrum (unlicensed spectrum), or may communicate with each other by using both a licensed spectrum and an unlicensed spectrum. The network device and the terminal device may communicate with each other by using a spectrum below 6 gigahertz (gigahertz, GHz), may communicate with each other by using a spectrum above 6 GHz, or may communicate with each other by using both a spectrum below 6 GHz and a spectrum above 6 GHz. A spectrum resource used between the network device and the terminal device is not limited in embodiments of this application.

The following briefly describes nouns in this application.

### High-speed railway dedicated network

The high-speed railway dedicated network is a cell that is deployed along a high-speed railway line and provides a service for a high-speed railway user. The high-speed railway user may include a passenger, a train attendant, and the like in a moving high-speed train.

### High-speed railway public network

The high-speed railway public network is a cell that is deployed around the high-speed railway dedicated network and provides a service for a non-high-speed railway user. The non-high-speed railway user may include a user near the high-speed railway line. It should be noted that in this application, a first terminal corresponds to a high-speed railway user, and a second terminal corresponds to a non-high-speed railway user.

For the high-speed railway dedicated network and the high-speed railway public network, this application provides a networking manner. FIG. 2 is a diagram of the networking manner.

It can be learned that two frequencies are deployed in a cell (corresponding to a first cell) corresponding to the high-speed railway dedicated network, and are denoted as a first frequency and a second frequency. The first cell serves the first terminal. To be specific, in the first cell, the network device may communicate, at the first frequency and the second frequency, with a terminal that camps on the first cell. One frequency is deployed in a cell (corresponding to a second cell) corresponding to the high-speed railway public network, and is denoted as a third frequency. The second cell serves the second terminal. To be specific, in the second cell, the network device may communicate, at the third frequency, with a terminal that camps on the second cell.

In this application, the cell corresponding to the high-speed railway dedicated network may include one or more first cells. The first terminal accesses one of the first cells at the first frequency preferentially. The cell corresponding to the high-speed railway public network may include one or more second cells. The second terminal accesses one of the second cells at the third frequency preferentially. The following describes this application by using an example in which the cell corresponding to the high-speed railway dedicated network includes a plurality of first cells and the cell corresponding to the high-speed railway public network includes a plurality of second cells.

For a terminal that camps on the first cell at the first frequency, if the terminal needs to be handed over from the first cell to the second cell, a first mapping relationship needs to be configured for the network device, and the first mapping relationship includes a correspondence among the plurality of first cells, the first frequency, the third frequency, and the plurality of second cells. Based on the first mapping relationship, the network device may obtain a measurement report about the plurality of second cells corresponding to the plurality of first cells. After obtaining the measurement report about the plurality of second cells, the network device may generate a first target cell list of the terminal based on the measurement report. The first target cell list includes a second cell that has good communication quality in the plurality of second cells, the third frequency, and the first cell and the first frequency that correspond to the second cell and the third frequency. Then, when the terminal that camps on the first cell at the first frequency needs to be handed over to the second cell corresponding to the third frequency, the network device may determine, from the first target cell list, the third frequency and the second cell that correspond to the first cell and the first frequency, and hand over the terminal from the first cell to the second cell. In this case, the terminal accesses the second cell at the third frequency.

For a terminal that camps on the first cell at the second frequency, if the terminal needs to be handed over from the first cell to the second cell, a second mapping relationship needs to be configured for the network device, and the second mapping relationship includes a correspondence among the plurality of first cells, the second frequency, the third frequency, and the plurality of second cells. Based on the second mapping relationship, the network device may obtain a measurement report about the plurality of second cells corresponding to the plurality of first cells. After obtaining the measurement report about the plurality of second cells, the network device may generate a second target cell list of the terminal based on the measurement report. The second target cell list includes the second cell that has good communication quality in the plurality of second cells, the third frequency, and the first cell and the second frequency that correspond to the second cell and the third frequency. Then, when the terminal that camps on the first cell at the second frequency needs to be handed over to the second cell corresponding to the third frequency, the network device may determine, from the second target list, the third frequency and the second cell that correspond to the first cell and the second frequency, and hand over the terminal from the first cell to the second cell. In this case, the terminal accesses the second cell at the third frequency.

For a terminal that camps on the second cell at the third frequency, if the terminal needs to be handed over from the second cell to the first frequency of the first cell, the first mapping relationship needs to be configured for the network device. Based on the first mapping relationship, the network device may obtain a measurement report about the plurality of first cells corresponding to the plurality of second cells. After obtaining the measurement report about the plurality of first cells, the network device may generate a third target cell list of the terminal based on the measurement report. The third target cell list includes a first cell that has good communication quality in the plurality of first cells, the first frequency, and the second cell and the third frequency that correspond to the first cell and the first frequency. Then, when the terminal that camps on the second cell needs to be handed over to the first frequency of the first cell, the network device may determine, from the third target cell list, the first frequency and the first cell that correspond to the second cell and the third frequency, and hand over the terminal from the second cell to the first cell. In this case, the terminal accesses the first cell at the first frequency.

For the terminal that camps on the second cell at the third frequency, if the terminal needs to be handed over from the second cell to the second frequency of the first cell, the second mapping relationship needs to be configured for the network device. Based on the second mapping relationship, the network device may obtain the measurement report about the plurality of first cells corresponding to the plurality of second cells. After obtaining the measurement report about the plurality of first cells, the network device may generate a fourth target cell list of the terminal based on the measurement report. The fourth target cell list includes the first cell that has good communication quality in the plurality of first cells, the second frequency, and the second cell and the third frequency that correspond to the first cell and the second frequency. Then, when the terminal that camps on the second cell needs to be handed over to the second frequency of the first cell, the network device may determine, from the fourth target cell list, the second frequency and the first cell that correspond to the second cell and the third frequency, and hand over the terminal from the second cell to the first cell. In this case, the terminal accesses the first cell at the second frequency.

In this application, to prevent the first terminal from being handed over from the first cell to the second cell after the first terminal accesses the first cell at the first frequency, and prevent the second terminal from being handed over from the second cell to the first frequency of the first cell after the second terminal accesses the second cell at the third frequency, the network device does not allow the first terminal to be handed over from the first cell to the second cell after the first terminal accesses the first frequency of the first cell, and does not allow the second terminal to be handed over from the second cell to the first frequency of the first cell after the second terminal accesses the second cell at the third frequency. Therefore, in the networking manner shown in FIG. 2, the first mapping relationship is not configured for the first network device. In this case, the network device cannot hand over, from the first cell to the second cell, the first terminal that accesses the first cell at the first frequency, and the network device cannot hand over the second terminal from the second cell to the first frequency of the first cell.

It should be noted that because the first terminal chooses to access the first cell at the first frequency preferentially, if the second terminal is handed over from the second cell to the first cell at the first frequency, communication experience of the high-speed railway user is affected.

In addition, to avoid a call drop when the second terminal moves in an overlapping area between the first cell and the second cell, the network device allows the second terminal to be handed over from the second cell to the second frequency of the first cell when a call drop risk occurs. Based on this, the second mapping relationship is configured for the network device. When the call drop risk occurs in the second terminal, the network device may hand over the second terminal from the second cell to the second frequency of the first cell based on the fourth target cell list.

For example, in an implementation, the second frequency and the third frequency may be a same frequency. In this case, a second SSB sent by the network device at the second frequency and a third SSB sent at the third frequency are a same SSB. Correspondingly, a second SSB received by the first terminal at the second frequency and a third SSB received at the third frequency are a same SSB.

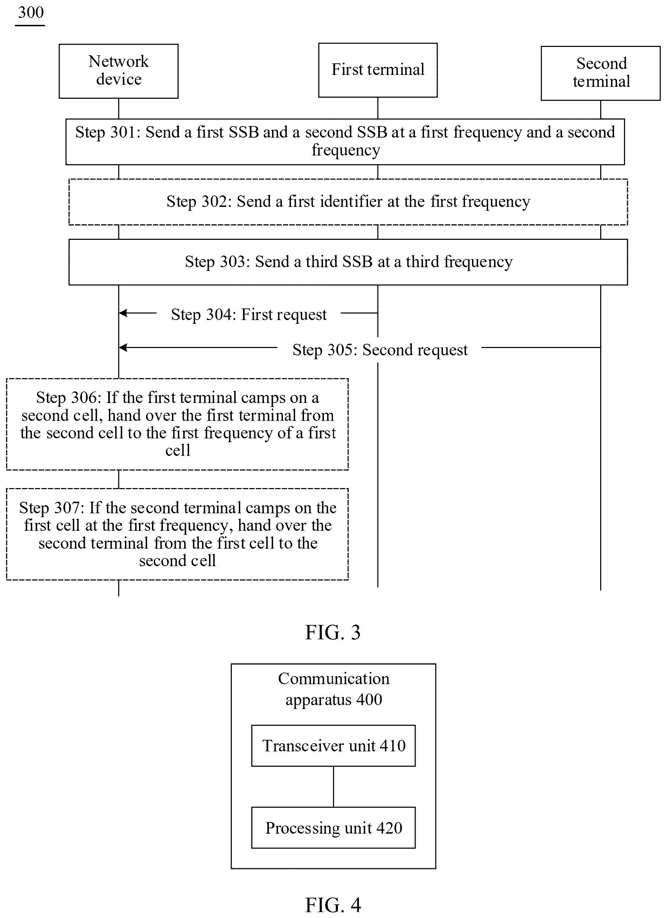

Based on the networking manner shown in FIG. 2, to enable the first terminal to access the first cell at the first frequency preferentially, this application provides a communication method 300. FIG. 3 is a schematic flowchart of the communication method 300. The following describes the method in detail.

Step 301: A network device sends a first SSB at a first frequency, and sends a second SSB at a second frequency, where the first frequency and the second frequency correspond to a first cell, and the first cell is a cell that serves a first terminal.

Step 303: The network device sends a third SSB at a third frequency, where the third frequency corresponds to a second cell, the second cell is a cell that serves a second terminal, and a moving speed of the second terminal is less than a moving speed of the first terminal.

Before the first terminal or the second terminal accesses the network device, the network device may respectively send the first synchronization signal block (synchronization signal block, SSB), the second SSB, and the third SSB at the first frequency, the second frequency, and the third frequency. Step 304: The first terminal sends a first request to the network device, where the first request requests, from the network device, access to the first cell at the first frequency.

After the network device sends the SSBs at the first frequency, the second frequency, and the third frequency, the SSBs may be received by the first terminal, and the first terminal may choose to access the first cell at the first frequency. In this case, the first terminal may send the first request to the network device, to request to access the first cell at the first frequency.

Step 305: The second terminal sends a second request to the network device, where the second request requests the network device for accessing the second cell at the third frequency.

After the network device sends the first SSB, the second SSB, and the third SSB at the first frequency, the second frequency, and the third frequency, the first SSB, the second SSB, and the third SSB may be received by the second terminal, and the second terminal may choose to access the second cell at the third frequency. In this case, the second terminal may send the second request to the network device, to request to access the second cell at the third frequency.

For example, in an implementation, transmit power (corresponding to first transmit power) used when the network device sends the first SSB at the first frequency is greater than transmit power (corresponding to second transmit power) used when the network device sends the second SSB at the second frequency.

To enable the first terminal to choose to access the first cell at the first frequency preferentially, when transmitting the first SSB and the second SSB, the network device may use higher transmit power for the first SSB sent at the first frequency, and use lower transmit power for the second SSB sent at the second frequency. In this case, signal energy of the first SSB detected by the first terminal at the first frequency is high, and then the first terminal may choose to access the first cell at the first frequency.

For example, in an implementation, the method 300 may further include: Step 302: The network device sends a first identifier at the first frequency, where the first identifier indicates that the first cell is a cell that serves the first terminal.

For example, to enable the first terminal to choose to access the first cell at the first frequency preferentially, the network device may send the first identifier at the first frequency, and the first terminal may determine, based on the first identifier received at the first frequency, that the first cell is a cell that serves the first terminal. In this case, the first terminal may access the first cell at the first frequency, to improve accuracy of accessing the first cell by the first terminal at the first frequency.

For example, the first identifier may be carried in a system information block (system information block, SIB), and the network device broadcasts the SIB, so that the first terminal can obtain the first identifier.

The foregoing described manner in which the first terminal chooses to access the first cell at the first frequency preferentially may be independently used, or may be used after combination. This is not limited in this application.

It should be noted that when the network device sends the first identifier, if the second terminal obtains the first identifier at the first frequency, the second terminal may determine, based on the first identifier received at the first frequency, that the first cell is a cell that serves the first terminal. In this case, the second terminal may choose to access the second cell at the third frequency, to improve accuracy of accessing the second cell by the second terminal at the third frequency.

For example, in an implementation, the method 300 may further include the following step:
Step 306: If the first terminal camps on the second cell, the network device hands over the first terminal from the second cell to the first frequency of the first cell.

For example, after accessing the first cell at the first frequency, the first terminal is incorrectly handed over from the first cell to the second cell. In this case, after the network device identifies that the first terminal corresponds to a high-speed railway user, in an implementation, the network device may hand over the first terminal from the second cell to the first frequency of the first cell based on a third target cell list.

In another implementation, the network device may hand over the first terminal to the second frequency of the first cell based on a fourth target cell list, and then hand over the first terminal from the second frequency of the first cell to the first frequency of the first cell.

For example, in an implementation, the method 300 may further include the following step:
Step 307: If the second terminal camps on the first cell at the first frequency, the network device hands over the second terminal from the first cell to the second cell.

For example, the second terminal currently camps on the first frequency of the first cell. For example, when the second terminal accesses a network for the first time, the second terminal accesses the first frequency of the first cell. In this case, after identifying that the second terminal corresponds to a non-high-speed railway user, the network device may hand over the second terminal from the first frequency of the first cell to the second frequency of the first cell, and then hand over the second terminal from the second frequency of the first cell to the second cell based on a second target cell list.

For example, the second terminal currently camps on the second frequency of the first cell. For example, when a call drop risk occurs in the second terminal, the network device hands over the second terminal from the second cell to the second frequency of the first cell based on the fourth target cell list, and then hands over the second terminal from the second frequency of the first cell to the first frequency of the first cell. In this case, after the network device identifies that the second terminal corresponds to a non-high-speed railway user, in an implementation, the network device may hand over the second terminal from the second frequency of the first cell to the second cell based on the second target cell list; or in another implementation, when communication quality of the second frequency of the first cell is poorer than communication quality of the second cell, the network device may hand over the second terminal from the second frequency of the first cell to the second cell based on the second target cell list.

For example, the network device may identify, in the following manner, that the terminal corresponds to a high-speed railway user or corresponds to a non-high-speed railway user.

For example, the network device or a core network device may identify, based on the moving speed of the terminal, whether the terminal corresponds to a high-speed railway user or whether the terminal corresponds to a non-high-speed railway user. For example, the network device or the core network device may determine the moving speed of the terminal based on a Doppler frequency shift of the terminal.

It should be noted that, alternatively, the core network device may identify, in the foregoing manner, that the terminal corresponds to a high-speed railway user or corresponds to a non-high-speed railway user, and then notify the network device of an identification result.

It may be understood that, to implement functions in the foregoing embodiment, the terminal includes corresponding hardware structures and/or software modules for performing the functions. A person skilled in the art should be easily aware that, in embodiments of this application, the units and method steps in the examples described with reference to embodiments disclosed in embodiments of this application can be implemented by hardware or a combination of hardware and computer software. Whether a function is performed by hardware or hardware driven by computer software depends on particular application scenarios and design constraint conditions of the technical solutions.

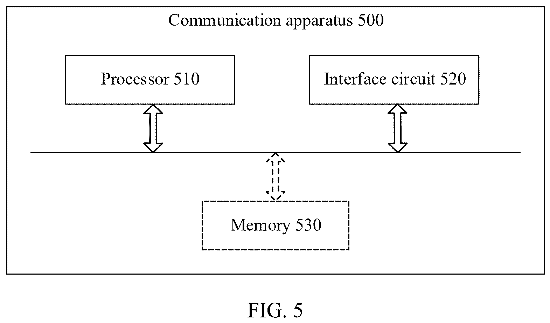

FIG. 4 and FIG. 5 each are a diagram of a structure of a possible communication apparatus according to an embodiment of this application. These communication apparatuses may be configured to implement functions of the network device or the terminal device in the foregoing method embodiment, and therefore can also implement beneficial effects of the foregoing method embodiment. In embodiments of this application, the communication apparatus may be the terminal device 130 or the terminal device 140 shown in FIG. 1, may be the radio access network device 120 shown in FIG. 1, or may be a module (for example, a chip) used in the terminal device or the network device.

As shown in FIG. 4, a communication apparatus 400 includes a transceiver unit 410 and a processing unit 420. The communication apparatus 400 is configured to implement the function of the network device, the first terminal, or the second terminal in the method embodiment shown in FIG. 3.

When the communication apparatus 400 is configured to implement the function of the network device in the method embodiment shown in FIG. 3, the transceiver unit 410 is configured to send a first SSB at a first frequency, and send a second SSB at a second frequency. The first frequency and the second frequency correspond to a first cell, and the first cell is a cell that serves the first terminal. The transceiver unit 410 is further configured to send the SSB at a third frequency, the third frequency corresponds to a second cell, the second cell is a cell that serves the second terminal, and a moving speed of the second terminal is less than a moving speed of the first terminal. A first mapping relationship is not configured for the network device, and the first mapping relationship includes a correspondence among the first cell, the first frequency, the second cell, and the third frequency; and a second mapping relationship is configured for the network device, and the second mapping relationship includes a correspondence among the first cell, the second frequency, the second cell, and the third frequency. The transceiver unit 410 is further configured to receive a first request from the first terminal. The first request requests to access the first cell at the first frequency. The transceiver unit 410 is further configured to receive a second request from the second terminal. The second request requests to access the second cell at the third frequency.

When the communication apparatus 400 is configured to implement the function of the first terminal in the method embodiment shown in FIG. 3, the transceiver unit 410 is configured to receive SSBs from the network device at a first frequency and a second frequency. The first frequency and the second frequency correspond to a first cell, and the first cell is a cell that serves the first terminal. A first mapping relationship is not configured for the network device, and the first mapping relationship includes a correspondence among the first cell, the first frequency, the second cell, and the third frequency; and a second mapping relationship is configured for the network device, the second mapping relationship includes a correspondence among the first cell, the second frequency, the second cell, and the third frequency, the third frequency corresponds to the second cell, the second cell is a cell that serves the second terminal, and a moving speed of the second terminal is less than a moving speed of the first terminal. The transceiver unit 410 is further configured to send a first request to the network device. The first request requests to access the first cell at the first frequency.

For more detailed descriptions of the transceiver unit 410 and the processing unit 420, directly refer to related descriptions in the method embodiment shown in FIG. 3. Details are not described herein.

As shown in FIG. 5, a communication apparatus 500 includes a processor 510 and an interface circuit 520. The processor 510 and the interface circuit 520 are coupled to each other. It may be understood that the interface circuit 520 may be a transceiver or an input/output interface. Optionally, the communication apparatus 500 may further include a memory 530 configured to store instructions to be executed by the processor 510, store input data required for the processor 510 to run instructions, or store data generated after the processor 510 runs instructions.

When the communication apparatus 500 is configured to implement the method shown in FIG. 3, the processor 510 is configured to perform the function of the processing unit 420, and the interface circuit 520 is configured to perform the function of the transceiver unit 410.

When the communication apparatus is a chip used in the network device, the chip in the network device implements the function of the network device in the foregoing method embodiment. The chip in the network device receives information from another module (for example, a radio frequency module or an antenna) in the network device, and the information is sent by the terminal device to the network device. Alternatively, the chip in the network device sends information to another module (for example, a radio frequency module or an antenna) in the network device, and the information is sent by the network device to the terminal device.

When the communication apparatus is a chip used in the terminal device, the chip in the terminal device implements the function of the terminal device in the foregoing method embodiment. The chip in the terminal device receives information from another module (for example, a radio frequency module or an antenna) in the terminal device, and the information is sent by the network device to the terminal device. Alternatively, the chip in the terminal device sends information to another module (for example, a radio frequency module or an antenna) in the terminal device, and the information is sent by the terminal device to the network device.

It may be understood that the processor in embodiments of this application may be a central processing unit (Central Processing Unit, CPU), or may be another general-purpose processor, a digital signal processor (Digital Signal Processor, DSP), an application specific integrated circuit (Application Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, any conventional processor, or the like.

Method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a terminal. The processor and the storage medium may alternatively exist as discrete components in a terminal.

All or some of the foregoing embodiments may be implemented by using software, hardware, firmware, or any combination thereof. When software is used to implement embodiments, all or some of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a special-purpose computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired manner or in a wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

**In** each embodiment of embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

**In** embodiments of this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of embodiments of this application, the character "/" usually indicates that the associated objects are in an "or" relationship. In a formula of embodiments of this application, the character "/" indicates that the associated objects are in a "division" relationship. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, applied to a network device, and comprising:
sending a first SSB at a first frequency, and sending a second SSB at a second frequency, wherein the first frequency and the second frequency correspond to a first cell, and the first cell is a cell that serves a first terminal;
sending a third SSB at a third frequency, wherein the third frequency corresponds to a second cell, the second cell is a cell that serves a second terminal, and a moving speed of the second terminal is less than a moving speed of the first terminal, wherein
a first mapping relationship is not configured for the network device, and the first mapping relationship comprises a correspondence among the first cell, the first frequency, the second cell, and the third frequency; and a second mapping relationship is configured for the network device, and the second mapping relationship comprises a correspondence among the first cell, the second frequency, the second cell, and the third frequency;
receiving a first request from the first terminal, wherein the first request requests to access the first cell at the first frequency; and
receiving a second request from the second terminal, wherein the second request requests to access the second cell at the third frequency.

2. The method according to claim 1, wherein first transmit power is greater than second transmit power, the first transmit power is transmit power used when the first SSB is sent at the first frequency, and the second transmit power is transmit power used when the second SSB is sent at the second frequency.

3. The method according to claim 1 or 2, wherein the method further comprises: sending a first identifier at the first frequency, wherein the first identifier indicates that the first cell is a cell that serves the first terminal.

4. The method according to any one of claims 1 to 3, wherein the second frequency and the third frequency are a same frequency.

5. The method according to any one of claims 1 to 4, wherein the method further comprises:
if the first terminal camps on the second cell, handing over the first terminal from the second cell to the first frequency of the first cell.

6. The method according to any one of claims 1 to 5, wherein the method further comprises:
if the second terminal camps on the first cell at the first frequency, handing over the second terminal from the first cell to the second cell.

7. A communication method, applied to a first terminal, and comprising:
receiving a first SSB from a network device at a first frequency, and receiving a second SSB from the network device at a second frequency, wherein the first frequency and the second frequency correspond to a first cell, and the first cell is a cell that serves the first terminal, wherein
a first mapping relationship is not configured for the network device, and the first mapping relationship comprises a correspondence among the first cell, the first frequency, a second cell, and a third frequency; and a second mapping relationship is configured for the network device, the second mapping relationship comprises a correspondence among the first cell, the second frequency, the second cell, and the third frequency, the third frequency corresponds to the second cell, the second cell is a cell that serves a second terminal, and a moving speed of the second terminal is less than a moving speed of the first terminal; and
sending a first request to the network device, wherein the first request requests to access the first cell at the first frequency.

8. The method according to claim 7, wherein first transmit power is greater than second transmit power, the first transmit power is transmit power used when the first SSB is sent at the first frequency, and the second transmit power is transmit power used when the second SSB is sent at the second frequency.

9. The method according to claim 7 or 8, wherein the method further comprises:
receiving a first identifier that is sent by the network device at the first frequency, wherein the first identifier indicates that the first cell is a cell that serves the first terminal; and
the sending a first request to the network device comprises:
sending the first request to the network device based on the first identifier.

10. The method according to any one of claims 7 to 9, wherein the second frequency and the third frequency are a same frequency.

11. A communication method, applied to a second terminal, and comprising:
receiving a third SSB from a network device at a third frequency, wherein the third frequency corresponds to a second cell, and the second cell is a cell that serves the second terminal, wherein
a first mapping relationship is not configured for the network device, and the first mapping relationship comprises a correspondence among a first cell, a first frequency, the second cell, and the third frequency; and a second mapping relationship is configured for the network device, the second mapping relationship comprises a correspondence among the first cell, a second frequency, the second cell, and the third frequency, the first cell and the second frequency correspond to the first cell, the first cell is a cell that serves a first terminal, and a moving speed of the second terminal is less than a moving speed of the first terminal; and
sending a second request to the network device, wherein the second request requests to access the second cell at the third frequency.

12. The method according to claim 11, wherein first transmit power is greater than second transmit power, the first transmit power is transmit power used when a first SSB is sent to the first terminal at the first frequency, and the second transmit power is transmit power used when a second SSB is sent to the first terminal at the second frequency.

13. The method according to claim 11 or 12, wherein the method further comprises:
receiving a first identifier that is sent by the network device at the first frequency, wherein the first identifier indicates that the first cell is a cell that serves the first terminal; and
the sending a second request to the network device comprises:
sending the second request to the network device based on the first identifier.

14. The method according to any one of claims 11 to 13, wherein the second frequency and the third frequency are a same frequency.

15. A communication apparatus, comprising a processor and an interface circuit, wherein the interface circuit is configured to receive a signal from another communication apparatus and transmit the signal to the processor, or send a signal from the processor to another communication apparatus, and the processor is configured to implement, by using a logic circuit or by executing code instructions, the method according to any one of claims 1 to 6, or is configured to implement the method according to any one of claims 7 to 10, or is configured to implement the method according to any one of claims 11 to 14.

16. A communication apparatus, comprising a unit configured to perform the method according to any one of claims 1 to 6, or comprising a unit configured to perform the method according to any one of claims 7 to 10, or comprising a unit configured to perform the method according to any one of claims 11 to 14.

17. A computer-readable storage medium, wherein the storage medium stores a computer program or instructions, and when the computer program or the instructions are executed by a communication apparatus, the method according to any one of claims 1 to 6 is implemented, or the method according to any one of claims 7 to 10 is implemented, or the method according to any one of claims 11 to 14 is implemented.

18. A computer program product, comprising computer-readable instructions, and when the computer-readable instructions are run on a computer, the method according to any one of claims 1 to 6 is performed, or the method according to any one of claims 7 to 10 is performed, or the method according to any one of claims 11 to 14 is performed.
